# EUROPÄISCHE PATENTANMELDUNG

(11) **EP 0 953 474 A2**
(43) Veröffentlichungstag der Anmeldung: **03.11.1999**
(21) Anmeldenummer: 99105710.0
(22) Anmeldetag: 20.03.1999
(51) Int. Cl.: B60N 2/24

(54) **Sitzanordnung für der Personenbeförderung dienende Fahrzeuge**

(30) Priorität: 01.04.1998 DE 19814548
(71) Anmelder: SCHIMMELPFENNIG, Karl-Heinz, D-48167 Münster (DE)
(72) Erfinder: SCHIMMELPFENNIG, Karl-Heinz, D-48167 Münster (DE)
(74) Vertreter: Habbel, Hans-Georg, Dipl.-Ing.

(57) **Zusammenfassung**

Die Erfindung bezieht sich auf eine Sitzanordnung für der Personenbeförderung dienende Fahrzeuge, wobei eine an einem Gestänge festgelegte Sitzstütze vorgesehen ist, mehrere Sitzstützen hintereinander in Fahrtrichtung vorgesehen werden und eine von jeder Gestängeeinheit getragene Rückenlehne eingesetzt wird, die elastisch ausgebildet ist und die als Aufprallschutz für die in Fahrtrichtung gesehen die nächste Sitzstütze benutzende Person dient.

## Beschreibung

Die Erfindung bezieht sich auf eine Sitzanordnung für der Personenbeförderung dienende Fahrzeuge, wie z. B. Busse, Schienenfahrzeuge, Fähren od. dgl.

Es ist heute allgemein üblich, daß in der Personenbeförderung dienenden Fahrzeugen die Personen Sitzplätze einnehmen, die als normale Stühle oder Bänke ausgebildet sind, wie dies beispielsweise in der US-PS 26 65 165 beschrieben wird. Diese Beförderungsart hat den Nachteil, daß für jede Stuhlreihe oder jede Bank ein relativ großer Platzbedarf erforderlich ist, wenn der diese Sitzgelegenheit benutzenenden Person eine ausreichende Beinfreiheit zur Verfügung gestellt werden soll.

Weiterhin hat diese Art der Personenbeförderung den Nachteil, daß dann, wenn die Personen nicht angeschnallt sind, bei einem plötzlichen oder ruckartigen Bremsen des Fahrzeuges die Personen über die Rückenlehne des vor ihnen angeordneten Stuhles oder Sitzes geschleudert werden, so daß es zu erheblichen Verletzungen kommen kann.

Der Erfindung liegt die Aufgabe zugrunde, eine Sitzanordnung zu schaffen, die es ermöglicht, mehr Menschen auf gegebenem Raum eines Fahrzeuges unterzubringen. Weiterhin soll die Sicherheit der Personen auch bei einem plötzlichen Bremsen oder Stoppen des Transportfahrzeuges verbessert werden

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird vorgeschlagen, daß anstelle der üblichen Stuhl- oder Sitzreihen in dem Fahrzeug Sitzstützen in dem Fahrzeug vorgesehen werden, die z. B. am Gestänge festglegt sind. Derartige Sitzstützen oder auch Stehsitze sind z. B. als Miserikordien im Chorgestühl bekannt. Hier sind diese als Miserikordien bezeichneten Sitzstützen an der Unterseite des hochklappbaren Sitzbrettes vorgesehen, so daß auch im Stehen eine Abstützung des Körpergewichtes möglich ist.

Die gemäß der Erfindung vorgesehenen Sitzstützen sind z. B. an Gestängeeinheiten in entsprechender Höhe festgelegt und sind in der Lage, das Hauptkörpergewicht, d. h. das Gewicht des Oberkörpers eines die Sitzstütze benutzenden Menschen aufzunehmen, wobei diese Person fast stehend von der Sitzstütze getragen wird. Hieraus ergibt sich, daß Platzbedarf verringert wird, denn auch das Benutzen der Sitzstütze dann, wenn an der Eingangsseite bereits eine Person vorhanden ist, die nicht durchrutschen will, ist erfindungsgemäß leichter als wenn eine sitzende Person durch eine andere Person umgangen werden muß. Die Sitzstütze kann für eine oder mehrere Personen ausgelegt sein.

Weiterhin weist die Erfindung das Merkmal auf, daß mehrere Sitzstützen tragende Haltevorrichtungen, z. B. Gestängeeinheiten hintereinander in Fahrtrichtung gesehen angeordnet sind wobei eine jede Gestängeeinheit eine Rückenlehne trägt, die hinter der Sitzstütze vorgesehen wird und die, da sie elastisch ausgebildet ist, als Aufprallschutz für die in Fahrtrichtung gesehen die nächste hintere Sitzreihe benutzende Person dient. Die Rückenlehne hat also eine Doppelfunktion. Einmal dient sie zur Abstützung der die Sitzstütze benützenden Person, zum anderen dient sie im Unfalls-falle zur Absicherung der die Sitzstütze benützenden Person nach vorne hin, die nicht mit der vor ihr sitzenden Person in Kontakt kommen kann, da diese sich auch von der Rückenlehne durch die Wucht des Aufpralles oder durch die Wucht der Bremswirkung entfernt hat.

Jede Gestängeeinheit ist vorzugsweise als Rahmen ausgebildet, der am Boden und im Dachbereich des Fahrzeuges verankert wird. Weiterhin ist an jeder Gestängeeinheit ein zur Sitzstütze der nächsten Gestängeeinheit hin gerichteter Haltegriff vorgesehen, der also für die die Sitzstütze benutzende Person als Haltegriff während der Fahrt dient. Vorzugsweise erstreckt sich dabei der Haltegriff über die ganze Breite der Gestängeeinheit.

Zusätzlich können an jeder Gestängeeinheit an der Seite Stützgriffe angeordnet werden, die einerseits für die Personen, die sich nicht setzen wollen, beispielsweise im Gang eines Fahrzeuges zur Halterung dienen, andererseits aber auch während des Einsteigens für die den einzelnen Sitzstützen zustrebenden Personen als Halterung dienen.

Vorzugsweise und natürlich den Komfort erhöhend sind die Rückenlehne bzw. der Aufprallschutz als durchsichtige Kunststoffolien ausgebildet, d. h. sie vermitteln nicht das Gefühl, in einem engen Raum untergebracht zu sein, sondern dadurch, daß sie durchsichtig sind, ermöglichen sie die Beobachtung der Umwelt und der Fahrbahn. Hierbei sind gemäß einem konstruktiven Merkmal der Erfindung die Kunststoffolien im unteren Bereich im Abstand vom Fahrzeugboden festgelegt, so daß ein Durchstrecken der Füße unter die Sitzstütze des vorderen Sitzes möglich ist, wobei weiterhin diese Kunststoffolie im oberen Bereich an einer Spannrolle festgelegt sein kann, so daß in Abhängigkeit beispielsweise von der Temperatur oder sonstigen äußeren Bedingungen ein Nachspannen der Kunststoffolie möglich ist.

Schließlich schlägt die Erfindung vor, daß die Sitzstützen höhenverstellbar sind, so daß also beispielsweise ein Umrüsten eines Busses von einem normalen Transport auf einen Schul- oder Kindergartentransport ohne Schwierigkeiten möglich ist.

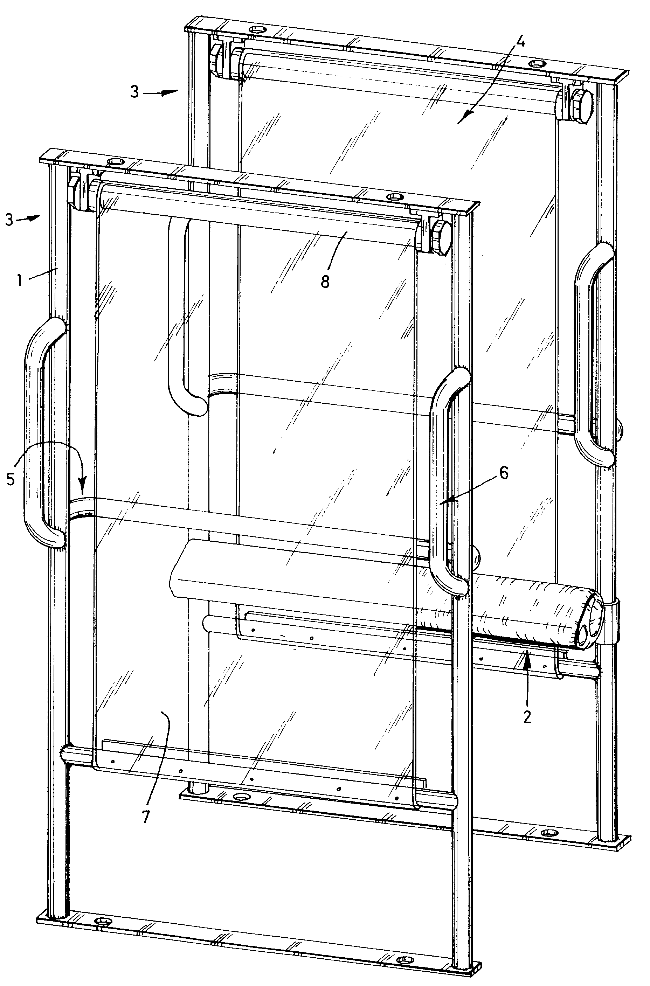

Ein Ausführungsbeispiel der Erfindung zeigt schematisch die Zeichnung.

In der Zeichnung sind mit 3 zwei Gestängeeinheiten bezeichnet, die hintereinander beispielsweise in einem Bus angeordnet werden. Diese Gestängeeinheiten 3 bestehen aus beispielsweise ein Viereck bildenden Gestänge 1, die am Boden und am Dach des Fahrzeuges verankert sind, während die beiden Vertikalstützen zum Gang des Busses hin gerichtet sind. Hier tragen die Gestängeeinheiten 3 Stützgriffe 6. Von den Gestängeeinheiten 3 getragen sind Sitzstützen 2 vorgesehen, von denen eine Sitzstütze 2 erkennbar ist. Diese Sitzstütze kann vertikal verstellbar an der Gestängeeinheit 3 angeordnet sein und entspricht einem 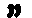 Stehsitz" oder einer 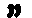 Miserikordie", d. h. also ermöglicht in einer nahezu stehenden Stellung der die Sitzstütze 2 benutzenden Person eine Abstützung des Gewichtes, insbesondere des Oberkörpers. Die Sitzstütze 2 kann für eine oder mehrere Personen ausgelegt sein.

An der Rückseite der Sitzstütze 2 ist eine Rückenlehne 4 vorgesehen, die für die die Sitzstütze 2 benutzende Person als Aufprallschutz dient. Dieser Rückenlehne 4 bzw. der Aufprallschutz besteht bei dem dargestellten Ausführungsbeispiel aus einer relativ dicken, jedenfalls zugfesten, durchsichtigen Kunststoffolie 7, die im unteren Bereich der Gestängeeinheit 3 fest angeordnet sein kann und im oberen Bereich beispielsweise auf einer Spannrolle 8 gelagert ist, die ein Nachspannen oder Einspannen der Kunststoffolie ermöglicht. Durch die Spannrolle 8 kann auch eine gewisse Nachgiebigkeit für den Fall des Aufpralles im Falle eines Unfalles erreicht werden.

Für die die Sitzstütze 2 benutzende Person oder Personen kann an der vorher angeordneten Gestängeeinheit ein Haltegriff 5 vorgesehen sein, der aber elastisch ausgebildet sein sollte.

Es ist erkennbar, daß für zwei hintereinander angeordnete Gestängeeinheiten 3 trotz hohem Komfort für die die Sitzstütze 2 benutzende Person weniger Raum erforderlich ist und daß trotzdem eine leichtere Zugänglichkeit auch bei Besetzen eines Teiles der Sitzstütze 2 durch eine Person zum anderen Bereich der Sitzstütze 2 gewährleistet ist.

## Patentansprüche

1. Sitzanordnung für der Personenbeförderung dienende Fahrzeuge, dadurch gekennzeichnet, daß anstelle von Stühlen oder Sitzen Sitzstützen (2) vorgesehen sind.

2. Sitzanordnung nach Anspruch 1, dadurch gekennzeichnet, daß die Rückenlehne (4) der Sitzstütze (2) als Aufprallschutz für die, die in Fahrtrichtung gesehen dahinterliegende Sitzstütze (2) benutzende Person dient.

3. Sitzanordnung nach Anspruch 1 oder 2, gekennzeichnet durch
a) eine an einem Gestänge (1) festgelegte Sitzstütze (2),
b) mehrere Sitzstützen (2) tragende Gestängeeinheiten (3), die hintereinander in Fahrtrichtung gesehen angeordnet sind,
c) eine von jeder Gestängeeinheit (3) getragene Rückenlehne (4), die - elastisch ausgebildet - als Aufprallschutz für die in Fahrtrichtung gesehen die dahinterliegende Sitzstütze (2) benutzende Person dient.

4. Sitzanordnung nach Anspruch 1 oder 2, dadurch gekennzeichnet, daß die Gestängeeinheit (3) als Rahmen ausgebildet ist, der am Boden und im Dachbereich des Fahrzeuges verankert ist.

5. Sitzanordnung nach Anspruch 1 oder 2, dadurch gekennzeichnet, daß an jeder Gestängeeinheit (3) ein zur Sitzstütze (2) der nächsten Gestängeeinheit (3) hin gerichteter Haltegriff (5) vorgesehen ist.

6. Sitzanordnung nach Anspruch 4, dadurch gekennzeichnet, daß der Haltegriff (5) sich über die ganze Breite der Gestängeeinheit (3) erstreckt.

7. Sitzanordnung nach einem der vorhergehenden Ansprüche, dadurch gekennzeichnet, daß an der Seite jeder Gestängeeinheit Stützgriffe (6) angeordnet sind.

8. Sitzanordnung nach einem der vorhergehenden Ansprüche, dadurch gekennzeichnet, daß die Rückenlehne (4) bzw. der Aufprallschutz als durchsichtige Kunststoffolie (7) ausgebildet ist.

9. Sitzanordnung nach einem der vorhergehenden Ansprüche, dadurch gekennzeichnet, daß die Kunststofffolie (7) im unteren Bereich im Abstand vom Fahrzeugboden festgelegt ist.

10. Sitzanordnung nach einem der vorhergehenden Ansprüche, dadurch gekennzeichnet, daß die Kunststoffolie (7) im oberen Bereich an einer Spannrolle (8) festgelegt ist.

11. Sitzanordnung nach einem der vorhergehenden Ansprüche, dadurch gekennzeichnet, daß die Sitzstütze (2) höheneinstellbar ausgebildet ist.

12. Sitzanordnung nach einem der vorhergehenden Ansprüche, dadurch gekennzeichnet, daß die Sitzstütze (2) eine Länge aufweist, die die Aufnahme mehrerer Personen ermöglicht.
